(19) Europäisches Patentamt
European Patent Office
Office européen des brevets

(11) **EP 2 371 586 A1**

(12) **EUROPEAN PATENT APPLICATION**

(43) Date of publication:
**05.10.2011 Bulletin 2011/40**

(51) Int Cl.:
***B60G 17/015*** (2006.01)    ***B60T 13/68*** (2006.01)

(21) Application number: **10157212.1**

(22) Date of filing: **22.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicant: **Haldex Brake Products AB**
**S-261 24 Landskrona (SE)**

(72) Inventors:
• **Drenth, Edo Frederik**
**25450 Helsingborg (SE)**

• **Nockhammar, Ola**
**21435 Malmö (SE)**

(74) Representative: **Rehberg, Bernhard Frank**
**Rehberg Hüppe + Partner**
**Nikolausberger Weg 62**
**37073 Göttingen (DE)**

Remarks:
Amended claims in accordance with Rule 137(2) EPC.

(54) **Method for controlling the fluidic actuation of a brake or suspension system**

(57)    The invention relates to a method for controlling the fluidic actuation of a hydraulic or pneumatic brake system (1) or a suspension system (2) of a vehicle.

According to the invention, a numerical dynamical model or observer is implemented in a simulation unit (13). At least one dynamical state of the system (1, 2) is simulated in the simulation unit (13) on the basis of the numerical dynamical model. The fluidic actuation of the brake system (1) or the suspension system (2) is controlled independent from the at least one simulated dynamical state.

The invention leads to reduced costs, increased reliability, fast control without the need to use filters, a reduced number of sensors and other advantages.

Fig. 1

EP 2 371 586 A1

**Description**

## TECHNICAL FIELD OF THE INVENTION

The present invention relates to a method for controlling the fluidic actuation of a brake system and/or a suspension system of a vehicle. In particular the method is used for the control of a hydraulic or pneumatic brake system and/or a pneumatic suspension system.

## TECHNICAL BACKGROUND

In vehicles the operating state of a brake system and/or a suspension system correlates with the fluidic actuation of the system, in particular the fluidic pressure in the brake actuators or the fluidic pressure in the air suspension bellows associated to a plurality of axles. Known fluidic systems comprise a pressurized fluidic source, in particular a reservoir and/or a compressor, an exhaust, control valves of different types and fluidic conduits connecting the aforementioned elements. The pressure in the brake actuator, the air suspension bellow or elements positioned upstream of the brake actuator or the air suspension bellow is measured by at least one sensor. The fluidic flow from the pressurized fluidic source to the brake actuator or to the air suspension bellow or from the brake actuator or the air suspension bellow to an exhaust is controlled with the aim of changing the sensed pressure to a desired pressure. Additionally the sensed pressure might be controlled on the basis of operating states of the vehicle, e.g. on the basis of reducing or avoiding a sensed wheel slip, on the basis of a desired retardation of the vehicle, on the basis of an electronic stability program (so called Electronic Stability Control "ESC") and the like.

One problem involved when controlling the fluidic system on the basis of a measured pressure signal is that any such signal is exposed to disturbances. Especially in situations of large fluidic flows through the system and along the sensor the disturbances are often severe. As a consequence, the sensed pressure signal has to be filtered before it is used in the control, leading to performance decreasing time delays in the control. There will also be situations of erratic control signals caused by the disturbances that might lead to decreased control performance.

Furthermore, known control systems require a relatively high technical effort because these control systems require a plurality of pressure sensors sensing the fluidic pressure at different locations in the system, in particular in the region of the valve assemblies, the brake actuators and/or the air suspension bellows. Sensors might be placed near or in the valve assemblies because wires for solenoids are already present in this area. This leads to a certain degree of failure rate. Also, a reduction of technical effort by using at least a reduced number of pressure sensors would reduce the costs of the system.

DE 10 2006 032 064 A1 relates to a pneumatic brake system with a reduced number of pressure sensors. The brake system is electronically controlled for avoiding or reducing slip during brake activation and during accelerating states of the vehicle. The actuation of the brake pedal by the driver is converted by an electronical control unit to desired brake pressures at the front axle and rear axle of the vehicle under consideration of the weight of the vehicle and a load of the vehicle as well as the brake force distribution at the front axle and the rear axle under consideration of a slip detected by a sensor. The control valves of the system are controlled such that the pressure in the actuators approximate the desired pressures wherein the pressure in the actuator is measured by a pressure sensor and fed back to the control unit. As a result of such feedback control, in the end the actual pressure in the actuators equals the desired pressure. In the next step of the proposed control method the wheel slip at the front axle is compared with the slip at the rear axle. In case of differing slips at the two axles, the desired pressure is adapted with a subsequent control step for changing the actual pressure to an adapted desired pressure. The control system might be the ABS system or an additional control unit or software module. Measured signals might be used both for the ABS and the control system. In case of corresponding wheel slips at the front end rear axles, the desired retardation determined from the brake pedal is compared to the actual retardation. In case of the desired retardation differing from the actual retardation, the desired pressure is adapted and the aforementioned control steps are repeated. The document discloses another embodiment, wherein the control does not require pressure sensors and a feedback control on the basis of pressure signals. Instead. for this embodiment the control bases on wheel slips. Here, the document mentions the use of pulse-width-modulated valves for controlling the pressure in the brake system. The document discloses a calculation of opening times or pulse ratios for the used valves under consideration of

- the known pressure in a reservoir,
- the weight and the load of the vehicle,
- the characteristic properties of brake cylinders and brake conduits
- as well as brake factors

by use of a look up table. The document alternatively discloses a programming process for the correlation of the pressure from a desired retardation wherein the correction process starts from scratch for every new brake application. The modified control system bases on sensor signals from the ABS, in particular a wheel speed sensor, for calculating valve opening times such that additional pressure sensors are no longer necessary. The described control system should also be used for an electronic brake system of a trailer. In these applications the trailer-CAN-bus is used for transferring indirectly measured or estimated wheel slips of a trailer to a trailer control module and for transferring the control signals to the towing vehicle. Additionally, a control based on wear of the brake system, a dynamical traction control and an electronic stability program might be used without pressure sensors. The anti lock system is used only as a provider of the wheel slips which are calculated from sensed wheel speeds an calculated vehicle speeds. The disclosed method without use of pressure sensor signals in the wheel ends presumes equal wheel slips on the axles. Such method cannot be used as underlying pressure control means when the demand originates the brake system in the EBS, ASR or ESC mode since in these modes there will be different wheel slips or fluctuating wheel slips on different wheels and axles.

The method disclosed by DE 10 2006 032 064 A1 is based on the assumption that a specific reservoir pressure and a specific valve opening time leads to a defined pressure change with time. However, this assumption is only true at low pressure levels within the brake system or brake actuator relative to the reservoir pressure. At pressure levels not low relative to the reservoir pressure, the pressure change per time unit changes significantly. Hence, the proposed method has degraded accuracy at high pressure levels in the brake actuator leading to the need of substantial corrective actions and therefore degraded performance. Also, the method presumes that the desired brake pressure distribution is to have equal slips on the axles. Hence, the method does not work in situations when different pressure distributions are desired. Also, the brake system does not provide options for learning from the wheel slips comparison based corrections. Instead, for every new brake application the corrections have to be carried out from scratch.

DE 10 2004 051 740 B4 relates to a control system for controlling an air suspension system for a vehicle. The document bases on the assumption that the correct opening times or opening cycles of a valve linking the air suspension bellows with an air pressure source or an exhaust depend on influencing parameters as

- the pressure difference between the reservoir or the exhaust and the air suspension bellow,
- the pneumatic characteristics of the valves and conduits and
- the weight and load of the vehicle.

The document suggests using a predictor for determining an estimated opening time interval for changing the level of the air suspension bellow or the vehicle to a desired level. The influencing parameters considered by the predictor are measured directly or indirectly. The desired value of the change of the level is determined from the difference between the actual level and a desired level. The load is e.g. determined from the change of the level when loading the vehicle or from the accelerating or decelerating behaviour of the loaded vehicle. The document describes the advantage that the use of the predicted time interval is independent from dynamic oscillations of the pressure signal used by other control systems leading to additional undesired control steps or a reduced control precision. Furthermore, the use of the predictor is of advantage for fast level changes building a problem for usual control systems. The document also discloses that - after determining a predicted opening time interval of the valve - an adaptation process for a change of the opening time interval might be used considering changing dynamical states or parameters of the air suspension system. The predictor might also consider an air consumption of additional consumers as in additional air suspension circuit, a brake circuit, a trailer circuit or an auxiliary circuit. It is also possible that the predictor considers the coupling process between the towing vehicle and trailer, a gear change, the activation or deactivation of a parking brake, the activation of a brake, the operating state of a compressor feeding the reservoir with pressurized air, characteristics of the air suspension bellow. The control unit uses a functional, one-dimensional or multi-dimensional dependency on the relevant parameters for the process of aerating and de-aerating the air spring bellows. Such dependencies are calculated in the control unit on the basis of functions. For another embodiment the dependencies are taken from look up tables. Furthermore, the document discloses an adaptation process for the functions and/or look up tables a priori before bringing the vehicle into the market or throughout the use of the vehicle.

## OBJECT OF THE INVENTION

It is the object of the present invention to provide a method for controlling the fluidic actuation of a brake system and/or a suspension system of a vehicle with a reduced dependency on measured dynamical states, in particular of the actuators.

## SOLUTION

The present invention provides a method for controlling the fluidic actuation of a brake system and/or a suspension system of a vehicle according to independent claim 1. Further embodiments of the method according to the invention are specified in the dependent claims 2 to 11. Another inventive solution is given by a control system according to claim 12.

## SUMMARY OF THE INVENTION

For a method according to the invention, the control method uses numerical dynamical model. Here, the numerical dynamical model might be built by any time variant or time invariant differential equation in any order, wherein the numerical dynamical model is in particular chosen such that

- it is as complex as necessary to consider the effects of interest
- but as simple as possible for this purpose.

The numerical dynamical model might alternatively be built by any difference equation in any order, which might be the discrete time equivalence to the continuous time differential equation. There might also be one part of the model for handling the time delay characteristics in the valves or solenoids that ist not built based on differential equations.
The numerical dynamical model might be derived from the fluidic properties of the components of the system or a group of components by deriving the relevant equation from these dynamical characteristics. Here, any simplification of a derived numerical dynamical model is possible by using approximations, linearizations, partial analytical solutions and the like. It is also possible to derive the numerical dynamical model from observations of the dynamical behaviour of the system or parts of the same. Furthermore, it is also possible to apply test signals upon the system for deriving the dynamic properties of the numeral dynamical systems, e.g. pressure pulse signals, a sinusoidal pressure signal, rectangular pressure signals, and the like. Also known modal analysis systems might be used for determining the numerical dynamical model. According to another approach the fluidic systems is run in a test mode for deriving the numerical dynamical model or its parameters. In its easiest form the model itself is given a priori whereas model parameters are determined by tests and/or adapted. According to one embodiment of the invention, an observer is used as the numerical dynamical system. Also the use of a numerical dynamical model basing on a cumulative use of the aforementioned methods for deriving the numerical dynamical model is possible. It is also possible that the different methods are used for single parts of the numerical dynamical model. Furthermore, it is possible that the numerical dynamical model describes the whole fluidic system or only parts of the same. It is also possible that a plurality of numerical dynamical model or different parts of the system is used and/or linked with each other by transferring simulated dynamical states from one dynamical model part to another.
One embodiment of the invention suggests simulating at least one simulated dynamical state of the brake system and/or the suspension system on the basis of the afore mentioned numerical dynamical model. Accordingly it is possible that (also without measuring actual dynamical states or with measuring a reduced number of measured dynamical states) at least one simulated dynamical state is available. This simulated dynamical state is then used for controlling the fluidic actuation of the brake system and/or the suspension system. Whereas according to the prior art the feedback control only bases on measured data, here the control might use the simulated dynamical state. Such embodiment leads to reduced costs due to the fact that the number of sensors might be reduced. Nevertheless, the simulation supplies a more or less precise time signal for the simulated dynamical state which is not biased by measurement errors as described above for a pressure sensor exposed to disturbances, large fluidic flows and the like. Also the need of filtering the state signal does not exist for the simulated dynamical state.
Generally, it is possible to continuously simulate the dynamical states throughout the entire use of the system. However, it is also possible that the simulation (and/or the control on the basis of the simulated dynamical states) is only performed in certain time regions of the use of the system being of relevance. E.g. the simulation and control might only be used throughout the activation or deactivation of the brake system and/or the suspension system.
According to another embodiment, the at least one simulated dynamical state is simulated in real time. Accordingly, the simulated dynamical state is available as needed and might be used for a feedback control instead of using a measured dynamical state. It is also possible that the states of a valve delay time model are used in the calculation of a new control action of the pneumatic actuator.
However, according to another embodiment of the invention, it is also possible that at least one future simulated dynamical state is simulated. According to this invention, the method might be used for building a predictor for the future time signal of the fluidic actuation of the system. To name only one advantage as an example in case of any element of the system having a reaction time differing from zero the future simulated state might be used for controlling this element with the reaction time in advance before the predicted time. On this basis, the control precision is increased and the control effort is reduced.
For a further embodiment of the inventive method, the control uses at least one solenoid valve for changing the fluidic states of the system. The solenoid valve might directly control the pressure conditions and flow in the system or might be used for a pilot or servo control of another valve controlled by the pilot pressure supplied by the solenoid valve.

For one embodiment of the inventive method, the simulation is "straightforward" without any adaptation process. However, according to a preferred embodiment of the method an adaptation process is used for increasing the precision of the simulation. The invention in particular suggests two characteristic properties of the simulation that might be adapted:

a) The adaptation process might be directed to an adaptation of the dynamical model itself. Here, any characteristic property or parameter of the dynamical model might be changed on the basis of measured data in comparison of the simulated data. To name only one possible example: the characteristic parameter for the free flow of the fluid in the system might be changed in case of detecting that the actual pressure change or change of the retardation or the brake force or slip differs from the simulated behaviour. Whereas in the simplest case the adaptation process is only directed to a change of the parameters of the dynamical model, for another embodiment the adaptation process might also change the general structure of the numerical dynamical model, e.g. by switching from one possible numerical dynamical model to another.

b) Also in case of a numerical dynamical model having a sufficient precision in particular for longer simulation time intervals, small deviations of the simulated dynamical states from the actual dynamical states might "sum up". Besides the consideration of detected deviations by the adaptation of the numerical dynamical model according to a), it is also possible that the simulated dynamical states are adapted, reset or brought in to accordance with measured or other estimated dynamical states of the system. To name only one example: in case of detecting that there is no relevant retardation of the vehicle but the simulated dynamical state indicating a simulated pressure in the brake actuator corresponding to a significant brake force, the simulated dynamical state might be adapted to a state correlating with no relevant brake force.

A combination of the adaptation processes according to a) and b) is also possible.

Further embodiments of the method use measured data for an adaptation process. The adaptation might be based upon a measured fluidic pressure, e.g. a fluidic pressure within the brake actuator itself, within a conduit leading to the brake actuator or within a valve controlling the flow to the brake actuator.

It is also possible that the adaptation processes bases on a measured wheel slip, so the slip of one single wheel, the slip at one axle or the slip at different axles, wherein also the algorithms described in DE 10 2006 032 064 A1 might be integrated within the present invention.

Furthermore, it is possible that the adaptation process bases on a directly or indirectly measured retardation of the vehicle, e. g. sensed by at least one accelerometer and/or wheel speed sensors or any other sensor.

It is possible that the adaptation process bases on a measured brake torque.

However, it is also possible that the adaptation process bases on a plurality of the aforementioned signals.

Analogue to DE 10 2006 032 064 A1, the observer based pneumatic control method can be used to control a brake actuation on at least one axle of the vehicle, where other brakes on the vehicle may be controlled based on conventional methods.

The control unit used for the inventive method might be a control unit only used for this method. However, it is also possible that a multifunctional control unit is used which e.g. is responsible both for the inventive method as well as other functions as the electronic stability program, the ABS-function, EBS-function, and the like. In such case, it is possible that the inventive method and the described adaptation process uses states available, estimated or calculated for the purpose of the other function as the ABS-function.

The invention might be used for a control basing only on the simulated data or by combined control basing both on simulated dynamical states as well as measured dynamical states. Another embodiment of the invention bases on the finding that known control methods fail in case of a sensor or the electrical lines between the control unit and the sensor decreases in performance by providing erratic or inaccurate data, being out of order or being interrupted. In these cases for control systems known from prior art the driver should be informed to stop the vehicle as soon as possible. According to another embodiment of the invention, in the normal operating state the fluidic actuation of the brake system and/or the suspension system is controlled on the basis of measured states which might be done similar to the well-known prior art. However, in case of detecting that at least one measured state is erratic or inaccurate, the control is switched from the normal control to a control of the fluidic actuation of the brake system and/or the suspension system in dependence on at least one simulated dynamical state. By switching the control to a "fallback solution" on the basis of the simulated dynamical state, dangerous driving conditions might be avoided and it is possible that the driver continues his route at least to the next garage, in some cases with reduced velocity. Also for detecting an erratic or inaccurate measured state a comparison of a simulated dynamical state with a measured dynamical state might be used. Furthermore, it is possible that in the inventive method a plurality of measured states might be selectively replaced by simulated dynamical states.

The invention also suggests interrupting or finishing the adaptation process of the dynamical model and/or at least one simulated dynamical state in case of detecting that at least one measured dynamical state used for adapting the dynamical model and/or at least one simulated dynamical state is erratic or inaccurate. This embodiment guarantees that in case of a defect of a sensor the numerical dynamical model and/or the simulated states are not subject to an adaptation process leading to an increased divergence of the model from the actual conditions.

Advantageous developments of the invention result from the claims, the description and the drawings. The advantages of features and of combinations of a plurality of features mentioned at the beginning of the description only serve as examples and may be used alternatively or cumulatively without the necessity of embodiments according to the invention having to obtain these advantages. Further features may be taken from the drawings, in particular from the illustrated designs and the dimensions of a plurality of components with respect to one another as well as from their relative arrangement and their operative connection. The combination of features of different embodiments of the invention or of features of different claims independent of the chosen references of the claims is also possible, and it is motivated herewith. This also relates to features which are illustrated in separate drawings, or which are mentioned when describing them. These features may also be combined with features of different claims. Furthermore, it is possible that further embodiments of the invention do not have the features mentioned in the claims.

## BRIEF DESCRIPTION OF THE DRAWINGS

The invention can be better understood with reference to the following drawings. The components in the drawings are not necessarily to scale, emphasis instead being placed upon clearly illustrating the principles of the present invention. In the drawings, like reference numerals designate corresponding parts throughout the several views.

**Fig. 1** is a schematic diagram of a brake system or a suspension system with a control system.

**Fig. 2** is a schematic flowchart of one embodiment of a method for controlling the fluidic actuation of a brake system or a suspension system.

**Fig. 3** is a schematic flowchart of other embodiment of a method for controlling the fluidic actuation of a brake system or a suspension system.

**Fig. 4** is a schematic block diagram showing the interaction between a control unit, a pneumatic observer and control device and a pneumatic actuator.

**Fig. 5** is a schematic block diagram showing the interaction between a supply solenoid control and exhaust solenoid control, a pneumatic actuator system simulation model or observer and a simulation correction feedback device.

**Fig. 6** is a schematic block diagram showing the interaction between a supply solenoid control and exhaust solenoid control, an observer, an observer model parameter adaptation device and a brake torque estimating device.

**Fig. 7** is a schematic flow chart of another embodiment of a method for controlling the fluidic actuation of a brake system or a suspension system.

**Fig. 8** schematically shows a conversion unit building an optional part of a dynamic simulation model.

## DETAILED DESCRIPTION OF THE DRAWINGS

The present invention might be embodied in a pneumatic or hydraulic brake system, a pneumatic suspension system or for both aforementioned systems. In case that in the following features are described in relation with a brake system only or a suspension system only, these features might also be used in connection with the other system.

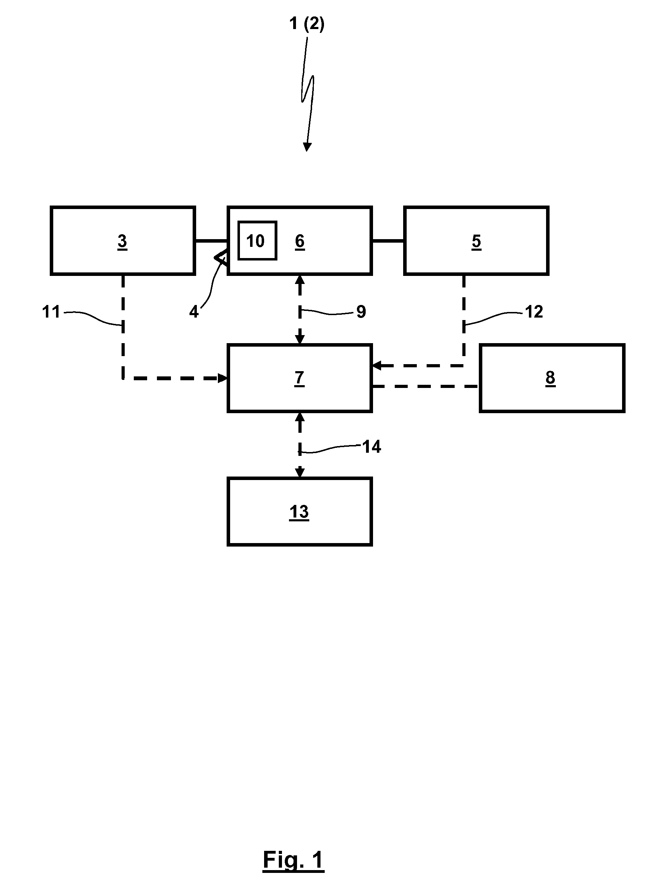

**Fig. 1** shows a schematic block diagram of a brake system 1 or suspension system 2. The system 1, 2 comprises a pressurized fluid source 3, in particular a compressor and/or at least one reservoir, and an exhaust 4. Furthermore, the system 1, 2 is equipped with at least one actuator 5, which in the case of a brake system 1 is at least one brake actuator and in the case of a suspension system 2 is at least one air suspension bellow. The pressurized fluid source 3 and the exhaust 4 are connected with the actuator 5 by means of a group of fluidic components 6, in particular conduits, valves, valve groups of any type known by the person with skill in the art. Fluidic connections of the system 1, 2 are marked by solid lines in Fig. 1. The system 1, 2 furthermore comprises an electronic control unit 7 (ECU). The electronic control unit 7 might communicate with another electronic control unit 8 used for different functions, e.g. an ABS or EBS control unit. However, it is also possible that there is only one single electronic control unit 7 being multifunctional and being used for different control purposes.

The electronic control unit 7 communicates with the group of fluidic components 6 via a control line 9. The group of fluidic components 6 comprises at least one solenoid valve 10 controlled by the electronic control unit 7 via the control line 9 for controlling the pressure and flow of the fluid in the system 1, 2 and for controlling directly or indirectly the fluidic actuation of the actuator 5. A control algorithm and control logic and a control software is implemented in the electronic control unit 7. Measured signals are transferred to the electronic control unit 7 from the pressurized fluid source 3, in particular a measured pressure signal in the reservoir, via sensor line 11 and from the actuator 5 via a sensor line 12.

For a simplification in the figures only one actuator 5 with respective connecting line is shown - in actual systems there is a plurality of actuators with the same or different fluidic actuations controlled by the group of pneumatic components 6 and ECU 7.

In a simulation unit 13 a numerical dynamical model or an observer is implemented. The run of a simulation leads to at least one simulated dynamical state of the system 1, 2 which is provided for the control unit 7 via a simulation line 14. From the simulation unit 13 any simulated or observed dynamical state might be transferred to the electronic control unit 7 including the simulated or observed state corresponding to the actually measured states transferred via the sensor lines 11, 12 such that the control algorithm implemented in the control unit 7 also works without or for an interruption of the sensor lines 11, 12. On the other hand via the simulation line 14 any dynamical state available in the CPU 7 might be transferred to the simulation unit 13 for use in the simulation, for adapting the simulated dynamical states and/or for adapting the numerical dynamical model implemented in the simulation unit 13 and/or for adapting model parameters.

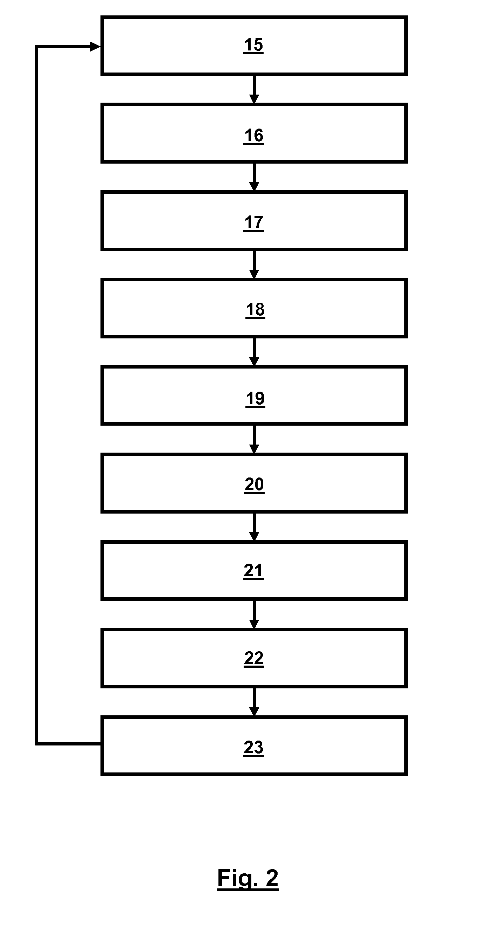

**Fig. 2** shows a schematic flowchart for an inventive method for controlling the fluidic actuation of a system 1, 2.:

- In a first step 15 the fluidic pressure demand for the actuator 5 is determined. In case of the system being a brake system the pressure demand might be determined from the activation of a brake pedal on the basis of procedures well known for the person with skill in the art or from funtions like ABS, ESC, ...

- In a subsequent step 16 the actual pressure in the pressurized fluid source 3 or an upstream pressure is determined, in particular by a sensor and by transferring the signal via sensor line 11.

- In a step 17 from the pressure determined in step 16 and the pressure demand determined in step 15 a control signal for a fluid supply solenoid and/or an exhaust solenoid being part of the group of fluidic components 6 is determined. According to the control signal transferred via control line 9, the operating state of an element of the group 6, in particular the supply solenoid and/or the exhaust solenoid is changed and the fluidic state in the system 1, 2 dynamically changes.

- In a subsequent step 18 the numerical dynamical model in the simulation unit 13 is run for determining at least one simulated dynamical state for the next time step forward in time.

- In the next step 19 the simulated dynamical state(s) are read out and/or transferred via the simulation line 14 to the electronic control unit 7.

- In a step 20 the simulated dynamical state as a result of step 18, in particular a simulated pressure, is compared with the pressure demand of step 15.

- In the next step 21 on the basis of the result of the comparison of step 20, the supply solenoid control action and/or exhaust solenoid control action is computed.

- In the step 22 the control signal for the supply and the exhaust solenoid is applied via control line 9 to the group of fluidic component 6, in particular the solenoid valve 10.

- In the next step 23 the method returns to the step 15.

In such case, the control might be performed without any sensed pressure signal or a signal from any other brake actuation indicative entities. An observer or dynamical simulation model is used in the control system to give rise to a virtual brake actuation indicative entity which is then used to control the brake actuation. The numerical or mathematical dynamical model including the characteristics of the system 1, 2 is run in the simulation unit 13 which might be executed in real time. The dynamic behaviour of the system 1, 2 and the actuator 5 is simulated. The simulation serves as an observer for the system 1, 2. The observer gives rise to an observed pressure signal. The observed pressure signal is compared to the pressure demand and control action is calculated for the valve solenoids.

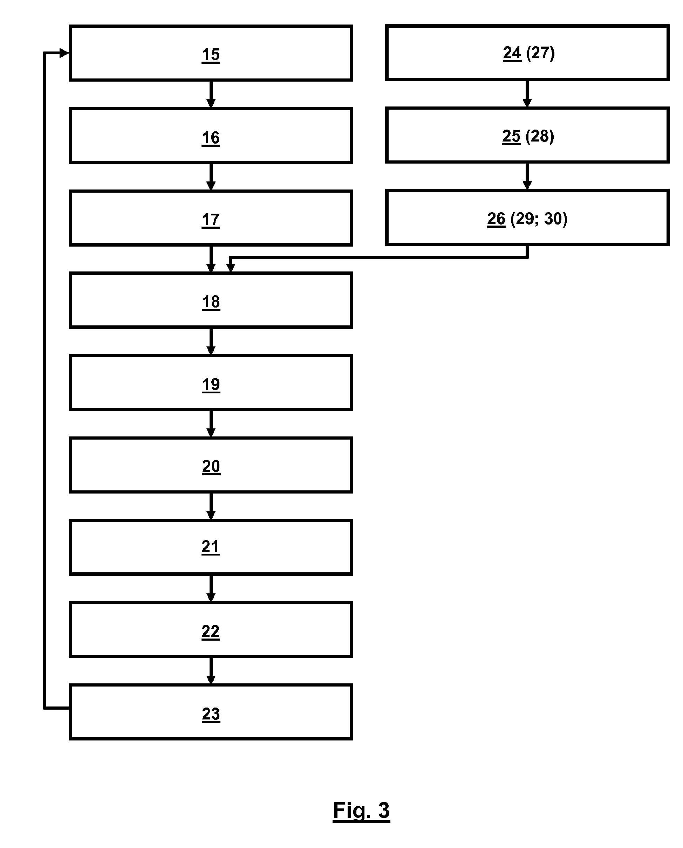

**Fig. 3** shows another embodiment of a method according to the invention. Here, the method comprises an additional branch with steps 24, 25, 26 executed parallel to the steps 15, 16, 17. In the step 24 the actual pressure in the actuator 5, in particular a brake pressure, is determined.

Furthermore, in step 25 an observer pressure is determined. Furthermore, in step 26 the observer pressure is compared to the actual pressure of the actuator 5. Observer state correction feedbacks are computed on the basis of the result of the aforementioned comparison. The observer states correction feedbacks are then input into step 18 and considered for the run of the numerical dynamical model according to step 18 for updating the states.

For this embodiment, the following additional measures can be taken: in case of the pressure sensor failure or pressure signal failure the observer state correction performed in step 26 is switched off. Hence, the pressure signal is used only indirectly or temporarily to support the observer or numerical dynamical model.

In a modification of the method in the parallel branch steps 27, 28, 29 are implemented instead of steps 24 to 26. In step 27 the wheel speed(s), the axle weight, the vehicle speed and the vehicle retardation are determined. Such determination might be done with the use of wheel speed sensors, and axle weight sensor, a signal from the suspension system, whereas the vehicle retardation might be determined on the basis of an ABS-system, an acceleration sensor and the like. In the subsequent step 28, the individual brake torques are estimated on the basis of the result of step 27. In the subsequent step 29, the individual brake torque is compared to the observed brake torque. Observer state correction feedbacks are computed on the basis of the aforementioned comparison. The resulting observer state correction feedbacks are input into step 18 such that the numerical dynamical model is run on the basis of the computed observer state correction feedbacks for the state update. The wheel slip relations and axle weight relations might be computed from different wheel ends. This leads to estimates of the relative brake torques. The vehicle retardation signal is used to scale the relative brake torque estimates to produce precise estimates of the individual brake torques. In the case of a signal failure, the observer state correction feedback might be switched off. Hence, the measured signals are used only indirectly or temporarily to support the observer or numerical simulation.

Instead or additional to step 29 in a step 30 it is possible to compare the individual brake torque determined in step 28 to the observed state and make adaptations of the observer or numerical dynamical model parameter(s). Based either on the sensed pressure signal or the estimated brake torque originating from vehicle retardation and comparison of different axle wheel slips and axle weight (or a combination of the two), parameter(s) of the numerical dynamical model is (are) adapted to make the numerical dynamical model fit better to the sensed brake actuator dynamic behaviour. Hence, the system is able to learn dissimilarities of the specific brake actuator dynamic behaviour, to make the dynamic characteristics more similar to the real behaviour. This leads to more accurate observer state predictions, which in turn leads to more accurate control performance in subsequent brake applications. In case of signal failure, this observer state correction feedback might also be switched off. Hence, the measurement signals are used only indirectly or temporality to support the observer and adapt the observer parameters.

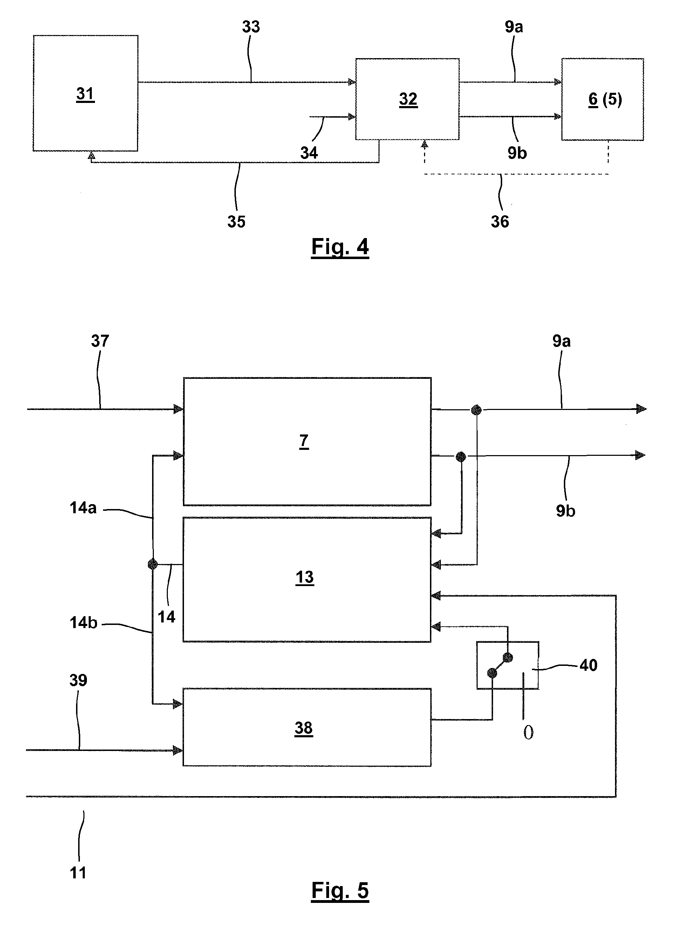

**Fig. 4** shows a schematic block diagram showing in particular the corporation between an EBS-system 31 and an integrated unit 32 including both the electronic control unit 7 and the simulation unit 13, so the observer as well as a control device. The EBS-system 31 transfers a signal via signal line 33 to the integrated unit 32. Such signal might include information concerning the actuator demand, e.g. the brake pressure demand, the clamp force demand and/or the brake torque demand. Furthermore, the pressure in the pressurized fluid source 3 is transferred via signal line 34 to the integrated unit 32. On the other hand via a signal line 35 at least one simulated dynamical state is transferred from the integrated unit 32 to the EBS-system 31 for further consideration. Any such simulated dynamical state might be an observed brake pressure, an observed clamp force, an observed brake torque and the like used in the EBS-system 31 additionally or as the actual brake pressure, actual clamp force or actual brake torque. The integrated unit 32 controls via control lines 9a, 9b the group 6 and/or the actuator 5. The actual pressure in the group 6 or actuator 5 might be fed back from the group 6 or actuator 5 to the integrated unit 32 via the feedback line 36. The EBS-system 31 might include an ABS-function, a TCS-function and/or an ESC-function, wherein the demanded states and the observed states are exchanged between the integrated unit 32 and EBS-system 31 for use in the different functions.

**Fig. 5** shows the simulation unit 13 with the implemented numerical dynamical model or observer, wherein at least one simulated dynamical state is calculated and output via the simulation line 14. Simulation line 14 branches into simulation line branches 14a, 14b, wherein simulation line 14a is input into the electronic control unit 7 with the implemented control for the supply solenoid and the exhaust solenoid. Furthermore, a pressure demand is input into the electronic control unit 7 via the pressure demand line 37. The simulation line branch 14b is input into a simulation correction feedback device 38. Additionally, the actual pressure is input into the simulation correction feedback device 38 via actual pressure line 39. The electronic control unit 7 generates the control signals for the supply solenoid and the exhaust solenoid and transfers these control signals via the control lines 9a, 9b. The signals of the control lines 9a, 9b are fed back to the simulation unit 13 as shown. Furthermore, via the sensor line 11 the pressure of the pressurized fluid source 3 is input into the simulation unit 13. A switching unit 40 is provided. In case of the measured signals transferred e.g. via sensor line 11 and actual pressure line 39 are correct or feasible, the corrections calculated in the simulation correction feedback device 38 are input via the switching unit 40 into the simulation unit 13 leading to an adapted numerical dynamical model and/or adapted simulated dynamical states. However, in case of detecting that the sensed signals are not correct or feasible, the switching unit 40 is switched into a different state, wherein the simulation correction feedback device 38 is deactivated such that the simulation in the simulation unit 13 is continued without any adaptations by the simulation correction feedback device 38.

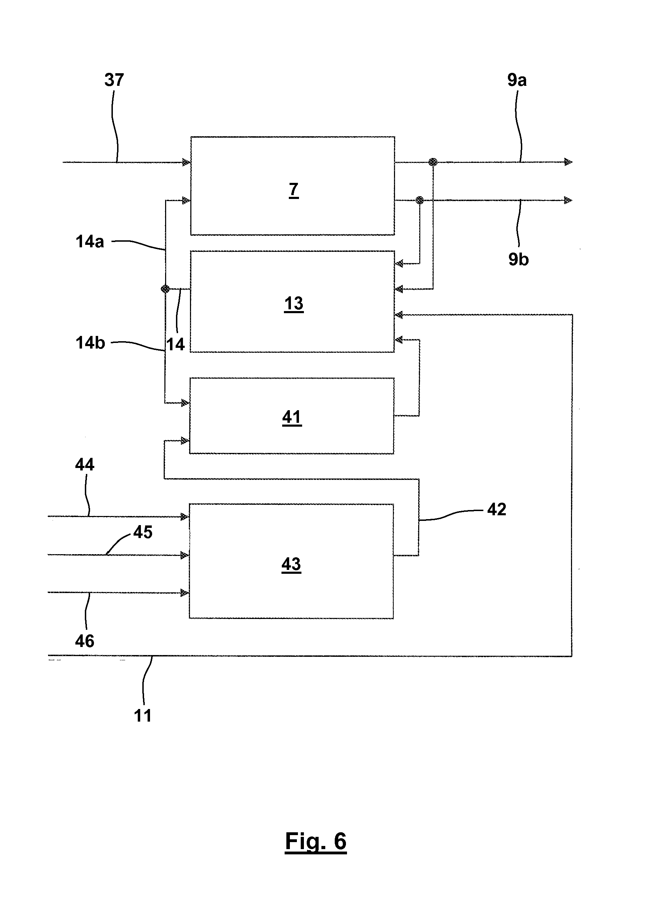

In **Fig. 6** the sensor line 11, simulation lines 14, 14a, 14b, the simulation unit 13, the electronic control unit 7 as well as the pressure demand line 37 and the control lines 9a, 9b cooperate similar to the embodiment shown in Fig. 5. However, for the embodiment shown in Fig. 6 instead of the simulation correction feedback device 38 an observer model parameter adaptation device 41 is used. The observer model parameter adaptation device calculates changes of the suitable model parameters from the observed brake torque or observed dynamical states transferred via simulation line branch 14b as well as an estimated brake torque transferred by the estimated brake torque line 42. The adapted model parameters are then input and considered in the simulation unit 13 and the numerical dynamical model. The estimated brake torque transferred by line 42 is calculated by a brake torque estimating device 43 from a (first) wheel speed signal 44, a vehicle retardation signal 45 and a vehicle speed signal 46.

The blocks shown in the block diagrams of Figs. 4 to 6 might correlate to components of the system, devices, control units and the like. However, it is also possible that blocks shown in these figures are implemented in one and the same unit or device but with a plurality of software modules.

In particular the present invention leads to the following alternative or cumulative advantages:

- The inventive control system and control method is not dependent on sensed pressure or other sensed actuation indicative signals. This reduces the system complexity and system cost and improves the reliability of the system.

- The observed actuation indicative entity, which the brake actuator control is based on, is very well conditioned and not exposed to disturbances. As a consequence, there is no need to filter the observer indicative entity, enabling fast, direct and accurate control response without time delays and fluctuations.

- The invention does not presume equal wheel slips on the involved axles. Hence, it is not only usable for load apportioning system braking, but also for other brake systems functionality, like for example ABS, TCS, ESC, ...

- The inventive method and system works well with high control accuracy and performance also at brake actuator demand pressures which are not low compared to the upstream supplied pressure.

- Since the invention comprises adaptability, it is able to learn brake specific actuator dissimilarities from previous brake applications, store the learned adaptions and use adaptations for later control actions. Hence, the upcoming model better fits the real behaviour leading to improved brake control accuracy and performance.

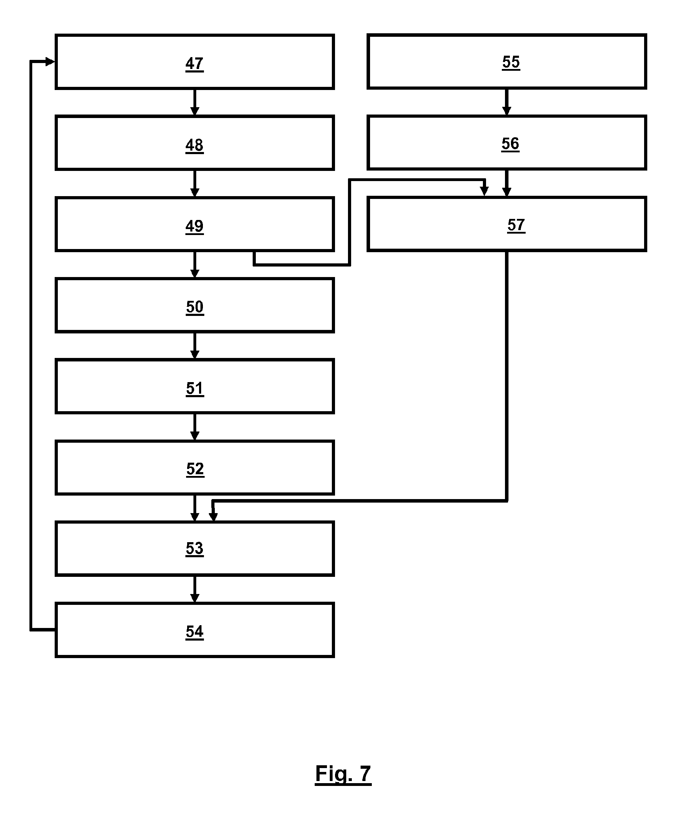

**Fig. 7** shows an alternative embodiment of a method for controlling the fluidic actuation of a brake system or a suspension system.

- In the step 47 a pressure demand is determined. In the subsequent step 48 the upstream pressure is determined.
- In the subsequent step 49 the observed pressure and other observer state(s) are read out.
- In the subsequent step 50 the pressure demand is compared with the observed state(s), in particular the observed pressure.
- Then, in the step 51 the new supply solenoid and exhaust solenoid control action are computed.
- In the next step 52 the control action is applied to the supply and the exhaust solenoid.
- In the step 53 the pneumatic dynamic simulation model is run one step forward in time.
- Finally, in step 54 the method returns back to step 47.

The method with the steps 47 to 54 constitutes an alternative to the embodiment shown in Fig. 2. This alternative embodiment also works without the additional steps 55-77 included in Fig. 7. However, for another embodiment the method uses also these steps 55-57:

- In the step 55 the wheel speeds, the vehicle speed, axle weights and a vehicle retardation are determined.
- Then, in step 56 individual brake torques are estimated.
- The resulting estimated individual brake torques determined in step 56 as well as the observed pressure and/or other observer state(d) read out in step 49 are used as inputs in the subsequent step 57. In this step 57 the individual brake torque is compared to the observed state. On the basis of this comparison adaptations are made of the observer model parameter(s).
- The adaptations of the observer model parameter(s) are input into the step 53 so that the observer or dynamical simulation model parameters adapted in step 57 can be used when running the pneumatic dynamic simulation model one time step forward in time in step 53.

**EP 2 371 586 A1**

In the steps 50, 51 the control calculation might also make use of the simulated valve/solenoid state(s), i.e. the remaining time delays until the valve/solenoid transitions are finished.

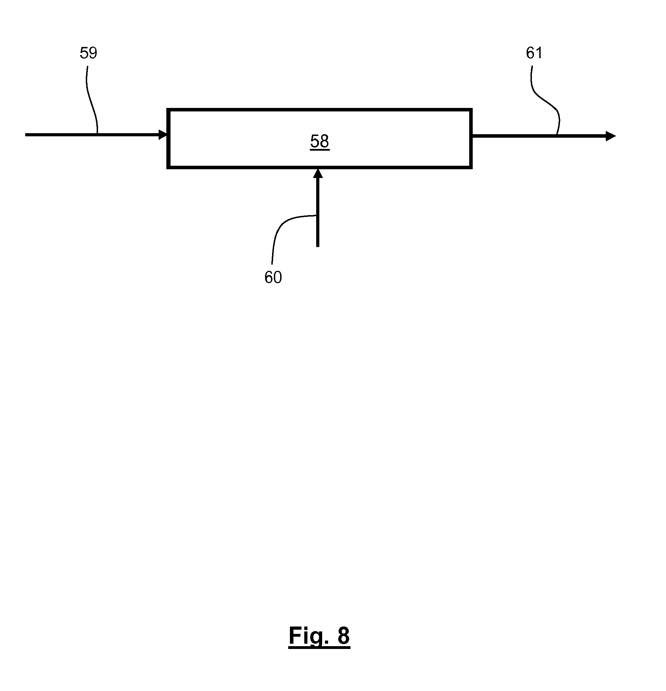

Analogue to DE 10 2006 032 064 A1, it is also possible to extend the method to also consider for example braking factors and the like. One part of the model is then linking pressure to torque. This sub-model could be adapted based on the methods described above, especially the method based on estimated brake torque from comparisons of wheel slips or other parameters or states, in some cases also in combination with a measured brake pressure. Based on the physical properties relating brake pressure to brake torque, a conversion unit for converting brake torque demand signal to brake pressure demand signal can be achieved which is shown in Fig. 8. Here the conversion unit is shown with the reference numeral 58. An actuator demand, e.g. a pressure demand, a clamp force demand and/or a brake torque demand is used as an input 59 for the conversion unit. Furthermore, functions, dependencies or parameters 60 considering the physical properties relating e.g. brake pressure to brake torque, clamp force demand or pressure demand are also input into the conversion unit 58. The conversion unit calculates from the input 59 and the parameters 60 the brake pressure demand 61.

The method of the simulation model based fluid actuation control, can take advantage of the usage of additional means of indication of the brake actuation. This information could then be used to make adaptations of the simulation, either to make corrections to the simulation model state(s) or to make corrections of at least one parameter in the model. In the following a "secondary" individual wheel torque estimation method based on comparison of wheel slips between different axles and between left and right side of the vehicle (or wheel speeds and possibly vehicle speed) is described as a non limiting example. Also the estimated or measured axle weight can be used to improve the torque estimates.

First, the total vehicle brake torque is estimated. One way to do this is by considering essentially the vehicle retardation and the vehicle mass. This information might also be produced in a more general vehicle state observer, which also might take other vehicle environment circumstances into account, such as the road inclination, wind resistance, roll resistance, ... . In the simplest case, the total brake torque can be calculated by:

$$T_{\text{Total}} = a_{\text{Vehicle}} m_{\text{Vehicle}} r_{\text{Wheel}} \qquad (1)$$

where $a_{\text{Vehicle}}$ is the vehicle acceleration/retardation, $m_{\text{Vehicle}}$ is the vehicle mass, and $r_{\text{Wheel}}$ is the effective wheel radius.

The total brake torque is consisting of the brake contribution from all wheels:

$$T_{\text{Total}} = T_{\text{Front}} + T_{\text{Rear}} \qquad (2)$$

where $T_{\text{Total}}$ is the sum of all brake torques, $T_{\text{Front}}$ is the sum of the front left and the front right brake torque, $T_{\text{Rear}}$ is the sum of the rear left and the rear right brake torque.

Considering only low to moderate braking, all wheels are considered to be in the linear low slip range of the tires characteristics. Then at steady state, the equation of the wheel is as follows:

$$T_{\text{i}} = r_{\text{i}} F_{Z,\text{i}} C_{\lambda,\text{i}} \lambda_{\text{i}} \qquad (3)$$

where $r_{\text{i}}$ is the wheel radius, $F_{Z,\text{i}}$ is the vertical load force, and $C_{\lambda,\text{i}}$ is the normalized longitudinal tire slip-stiffness, and $\lambda_{\text{i}}$ is the longitudinal wheel slip.

It is possible to use nominal values for the normalized tire slip-stiffness, or alternatively estimates as part of a vehicle state observer. Also the rolling radius can be estimated.

Now a comparison of the front axle to the rear axle leads to the following relationship:

$$\frac{T_{\text{Front}}}{T_{\text{Rear}}} = \frac{r_{\text{Front}} F_{Z,\text{Front}} C_{\lambda,\text{Front}} \lambda_{\text{Front}}}{r_{\text{Rear}} F_{Z,\text{Rear}} C_{\lambda,\text{Rear}} \lambda_{\text{Rear}}} \qquad (4)$$

Where $r_{\text{Front}}$ , $r_{\text{Rear}}$ are the wheel radius of the front respectively the wheels, $F_{Z,\text{Front}}$, $F_{Z,\text{Rear}}$ are the axle weight of the front respectively the rear axle, $C_{\lambda,\text{Front}}$ , $C_{\lambda,\text{Rear}}$ is the longitudinal tire slip-stiffness of the front respectively the rear wheels, and $\lambda_{\text{Front}}$, $\lambda_{\text{Rear}}$ are the longitudinal wheel slips of the front respectively the rear wheels. An alternative formula to (4) is:

$$\frac{T_{\text{Front}}}{T_{\text{Rear}}} = \frac{r_{\text{Front}} F_{Z,\text{Front}} C_{\lambda,\text{Front}}}{r_{\text{Rear}} F_{Z,\text{Rear}} C_{\lambda,\text{Rear}}} \frac{\left(v_{\text{Vehicle}} - v_{\text{FrontWheels}}\right)}{\left(v_{\text{Vehicle}} - v_{\text{RearWheels}}\right)} \qquad (5)$$

where $v_{\text{FrontWheels}}$, $v_{\text{RearWheels}}$ are the mean wheel speed at the front axle respectively the rear axle, and $v_{\text{Vehicle}}$ is the vehicle speed.

Now combine (2) and (4) lead to the estimates of the front and rear brake torques:

$$(6)$$

$$\begin{cases} q_{\text{FrontToRear}} = \dfrac{r_{\text{Front}} F_{Z,\text{Front}} C_{\lambda,\text{Front}}}{r_{\text{Rear}} F_{Z,\text{Rear}} C_{\lambda,\text{Rear}}} \\[2ex] T_{\text{Front}} = \dfrac{q_{\text{FrontToRear}} \dfrac{\lambda_{\text{Front}}}{\lambda_{\text{Rear}}}}{1 + q_{\text{FrontToRear}} \dfrac{\lambda_{\text{Front}}}{\lambda_{\text{Rear}}}} T_{\text{Total}} \\[3ex] T_{\text{Rear}} = \dfrac{1}{1 + q_{\text{FrontToRear}} \dfrac{\lambda_{\text{Front}}}{\lambda_{\text{Rear}}}} T_{\text{Total}} \end{cases}$$

The same consideration can be done for the left/right hand side of the vehicle. The left/right consideration will be easier though, since we can assume that the wheel radius, vertical load weight and the longitudinal tire slip-stiffness is equal on the left and right hand side of the vehicle, leading to:

$$q_{\text{LeftToRight}} = \frac{r_{\text{Left}} F_{Z,\text{Left}} C_{\lambda,\text{Left}}}{r_{\text{Right}} F_{Z,\text{Right}} C_{\lambda,\text{Right}}} \approx 1 \qquad (7)$$

$$\begin{cases} T_{\text{FrontLeft}} = \dfrac{\dfrac{\lambda_{\text{FrontLeft}}}{\lambda_{\text{FrontRight}}}}{1 + \dfrac{\lambda_{\text{FrontLeft}}}{\lambda_{\text{FrontRight}}}} T_{\text{Front}} \\[3ex] T_{\text{FrontRight}} = \dfrac{1}{1 + \dfrac{\lambda_{\text{FrontLeft}}}{\lambda_{\text{FrontRight}}}} T_{\text{Front}} \end{cases}$$

$$\begin{cases} T_{\text{RearLeft}} = \dfrac{\dfrac{\lambda_{\text{RearLeft}}}{\lambda_{\text{RearRight}}}}{1 + \dfrac{\lambda_{\text{RearLeft}}}{\lambda_{\text{RearRight}}}} T_{\text{Rear}} \\[3ex] T_{\text{RearRight}} = \dfrac{1}{1 + \dfrac{\lambda_{\text{RearLeft}}}{\lambda_{\text{RearRight}}}} T_{\text{Rear}} \end{cases}$$

Hence, usage of (6) and (7) leads to estimates of the individual brake torques determined from the tire slip and $T_{\text{Total}}$ or the vehicle acceleration or retardation. The method can be combined with some means of judging on situations suitable for usage of the brake torque estimates, and then to only enable the estimation in those situations.

**LIST OF REFERENCE NUMERALS**

| 1 | brake system |
|---|---|
| 2 | suspension system |
| 3 | pressurized fluid source |
| 4 | exhaust |
| 5 | actuator |
| 6 | group of fluidic components |
| 7 | electronic control unit |
| 8 | electronic control unit |
| 9 | control line |
| 10 | solenoid valve |
| 11 | sensor line |
| 12 | sensor line |
| 13 | simulation unit |
| 14 | simulation line |
| 15 | step |
| 16 | step |
| 17 | step |
| 18 | step |
| 19 | step |
| 20 | step |
| 21 | step |
| 22 | step |
| 23 | step |
| 24 | step |
| 25 | step |
| 26 | step |
| 27 | step |
| 28 | step |
| 29 | step |
| 30 | step |
| 31 | EBS-system |
| 32 | integrated unit |
| 33 | signal line |
| 34 | signal line |
| 35 | signal line |
| 36 | feedback line |
| 37 | pressure demand line |
| 38 | simulation correction device |
| 39 | actual pressure line |
| 40 | switching unit |
| 41 | parameter adaptation device |
| 42 | estimated brake torque line |
| 43 | brake torque estimating device |
| 44 | wheel speed signal |
| 45 | vehicle retardation signal |
| 46 | wheel speed signal |
| 47 | step |
| 48 | step |
| 49 | step |
| 50 | step |
| 51 | step |
| 52 | step |
| 53 | step |
| 54 | step |
| 55 | step |
| 56 | step |
| 57 | step |
| 58 | conversion unit |

59   input
60   parameters
61   brake pressure demand

**Claims**

1.  Method for controlling the fluidic actuation of a brake system (1) and/or a suspension system (2) of a vehicle, **characterized by**

    a) simulating at least one simulated dynamical state of the brake system (1) and/or the suspension system (2) in a numerical dynamical model and
    b) controlling the fluidic actuation of the brake system (1) and/or the suspension system (2) in dependence on the at least one simulated dynamical state.

2.  Method according to claim 1, wherein the at least one simulated dynamical state is simulated in real time.

3.  Method according to claim 1 or 2, wherein at least one future simulated dynamical state is simulated.

4.  Method according to one of claims 1 to 3, wherein the fluidic actuation of the brake system (1) and/or the suspension system (2) is controlled in dependence on the at least one simulated dynamical state by means of controlling at least one solenoid valve (10).

5.  Method according to one of claims 1 to 4, comprising the step of adapting the dynamical model and/or at least one simulated dynamical state on the basis of at least one measured dynamical state.

6.  Method according to claim 5, wherein the dynamical model and/or at least one simulated dynamical state is adapted on the basis of a measured fluidic pressure.

7.  Method according to claim 5 or 6, wherein the dynamical model of a brake system (1) and/or at least one simulated dynamical state is adapted on the basis of a measured wheel slip.

8.  Method according to claim 5, 6 or 7, wherein the dynamical model of a brake system (1) and/or at least one simulated dynamical state is adapted on the basis of a measured retardation of the vehicle.

9.  Method according to one of claims 5 to 8, wherein the dynamical model of a brake system (1) and/or at least one simulated dynamical state is adapted on the basis of a measured brake torque.

10. Method according to one of claims 5 to 9, wherein the step of adapting the dynamical model and/or at least one simulated dynamical state on the basis of at least one measured dynamical state is interrupted or finished in case of detecting that at least one measured dynamical state used for adapting the dynamical model and/or for adapting at least one simulated dynamical state is erratic or inaccurate.

11. Method according to one of claims 1 to 10, wherein

    a) normally the fluidic actuation of the brake system (1) and/or the suspension system (2) is controlled on the basis of measured states and
    b) in case of at least one measured state being detected as being erratic or inaccurate the control is switched to a control of the fluidic actuation of the brake system (1) and/or the suspension system (2) in dependence on at least one simulated dynamical state.

12. Control system for a fluidic brake system (1) or fluidic suspension system (2) of a vehicle, in particular for performing the method of one of claims 1 to 11, with

    a) an electronic control unit (7) with implemented control logic for controlling the brake system (1) or suspension system (2),
    b) at least one solenoid valve (10) controlled by the electronic control unit (7) for changing the fluidic actuation of the brake system (1) or suspension system (2),

c) a numerical dynamical model of the suspension system (2) or brake system (1) or parts of the same implemented in the electronic control unit (7) or an additional simulation unit (13) for simulating at least one simulated dynamical state of the brake system (1) and/or the suspension system(2),

d) a physical link or a software link for feeding the simulated dynamical state of the brake system (1) or the suspension system (2) to the control logic for controlling the brake system (1) or suspension system (2) in dependence on the at least one simulated dynamical state.

**Amended claims in accordance with Rule 137(2) EPC.**

**1.** Method for controlling the pneumatic actuation of a brake system (1) of a vehicle, wherein the method comprises

a) simulating at least one simulated dynamical state of the brake system (1) in a numerical dynamical model,

b) controlling the fluidic actuation of the brake system (1) in dependence on the at least one simulated dynamical state and

c) determining individual brake torques from the tire slip and the total brake torque or the vehicle acceleration.

**2.** Method according to claim 1, wherein the at least one simulated dynamical state is simulated in real time.

**3.** Method according to claim 1 or 2, wherein at least one future simulated dynamical state is simulated.

**4.** Method according to one of claims 1 to 3, wherein the pneumatic actuation of the brake system (1) is controlled in dependence on the at least one simulated dynamical state by means of controlling at least one solenoid valve (10).

**5.** Method according to one of claims 1 to 4, comprising the step of adapting the dynamical model and/or at least one simulated dynamical state on the basis of at least one measured dynamical state.

**6.** Method according to claim 5, wherein the dynamical model and/or at least one simulated dynamical state is adapted on the basis of a measured pneumatic pressure.

**7.** Method according to claim 5 or 6, wherein the dynamical model of the brake system (1) and/or at least one simulated dynamical state is adapted on the basis of a measured wheel slip.

**8.** Method according to claim 5, 6 or 7, wherein the dynamical model of the brake system (1) and/or at least one simulated dynamical state is adapted on the basis of a measured retardation of the vehicle.

**9.** Method according to one of claims 5 to 8, wherein the dynamical model of the brake system (1) and/or at least one simulated dynamical state is adapted on the basis of a measured brake torque.

**10.** Method according to one of claims 5 to 9, wherein the step of adapting the dynamical model and/or at least one simulated dynamical state on the basis of at least one measured dynamical state is interrupted or finished in case of detecting that at least one measured dynamical state used for adapting the dynamical model and/or for adapting at least one simulated dynamical state is erratic or inaccurate.

**11.** Method according to one of claims 1 to 10, wherein

a) normally the pneumatic actuation of the brake system (1) is controlled on the basis of measured states and

b) in case of at least one measured state being detected as being erratic or inaccurate the control is switched to a control of the pneumatic actuation of the brake system (1) in dependence on at least one simulated dynamical state.

**1 (2)**

**Fig. 1**

**Fig. 2**

**Fig. 3**

**Fig. 4**

**Fig. 5**

**Fig. 6**

| 47 |
|:--:|

| 48 |
|:--:|

| 49 |
|:--:|

| 50 |
|:--:|

| 51 |
|:--:|

| 52 |
|:--:|

| 53 |
|:--:|

| 54 |
|:--:|

| 55 |
|:--:|

| 56 |
|:--:|

| 57 |
|:--:|

**Fig. 7**

59

61

58

60

**Fig. 8**

Europäisches
Patentamt

European
Patent Office

Office européen
des brevets

## EUROPEAN SEARCH REPORT

Application Number

EP 10 15 7212

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 405 182 A (EWE ULRICH [DE] ET AL) 11 April 1995 (1995-04-11) | 1-6,12 | INV. B60G17/015 B60T13/68 |
| Y | * claims 1,2 * | 7-11 | |
| X | US 4 693 485 A (KAMEI EIICHI [JP] ET AL) 15 September 1987 (1987-09-15) * column 5, line 23 - column 7, line 30 * * column 12, line 48 - line 59 * | 1,3,12 | |
| X | US 5 557 523 A (YEH EDGE C [TW] ET AL) 17 September 1996 (1996-09-17) * column 4, line 15 - line 35 * | 1-5,12 | |
| X | US 2009/187320 A1 (ANTANAITIS DAVID B [US] ET AL) 23 July 2009 (2009-07-23) * paragraphs [0001], [0025] * * paragraph [0032] - paragraph [0033] * | 1-3,12 | |
| X | WO 00/55023 A1 (CONTINENTAL TEVES AG & CO OHG [DE]; LATARNIK CHRISTINE EF [DE]; FENNEL) 21 September 2000 (2000-09-21) * page 4, paragraph 3 - page 6 * | 1,4,5,12 | |
| Y | DE 199 19 180 A1 (CONTINENTAL TEVES AG & CO OHG [DE]) 2 November 2000 (2000-11-02) * page 3, line 18 - line 20 * | 7-9 | TECHNICAL FIELDS SEARCHED (IPC) B60G B60T |
| Y | DE 10 2004 058359 A1 (DAIMLER CHRYSLER AG [DE]) 14 July 2005 (2005-07-14) * paragraphs [0008] - [0010] * * paragraph [0014] * | 10,11 | |

The present search report has been drawn up for all claims

| Place of search | Date of completion of the search | Examiner |
|---|---|---|
| Munich | 6 August 2010 | Colonna, Massimo |

**ANNEX TO THE EUROPEAN SEARCH REPORT
ON EUROPEAN PATENT APPLICATION NO.**   EP 10 15 7212

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2010

| Patent document cited in search report | | Publication date | Patent family member(s) | | | Publication date |
|---|---|---|---|---|---|---|
| US 5405182 | A | 11-04-1995 | AT | 106334 | T | 15-06-1994 |
| | | | CA | 2081461 | A1 | 27-10-1991 |
| | | | DE | 4013278 | A1 | 31-10-1991 |
| | | | WO | 9116222 | A2 | 31-10-1991 |
| | | | EP | 0526482 | A1 | 10-02-1993 |
| | | | JP | 2846113 | B2 | 13-01-1999 |
| | | | JP | 5506629 | T | 30-09-1993 |
| US 4693485 | A | 15-09-1987 | DE | 3603346 | A1 | 07-08-1986 |
| | | | JP | 61178212 | A | 09-08-1986 |
| US 5557523 | A | 17-09-1996 | NONE | | | |
| US 2009187320 | A1 | 23-07-2009 | DE 102009004528 | | A1 | 29-10-2009 |
| WO 0055023 | A1 | 21-09-2000 | JP | 2002539031 | T | 19-11-2002 |
| | | | US | 6807848 | B1 | 26-10-2004 |
| DE 19919180 | A1 | 02-11-2000 | NONE | | | |
| DE 102004058359 | A1 | 14-07-2005 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102006032064 A1

- DE 102004051740 B4